# EUROPEAN PATENT APPLICATION

(11) **EP 4 730 227 A1**
(43) Date of publication of application: **22.04.2026**
(21) Application number: 25208885.1
(22) Date of filing: 15.10.2025
(51) Int. Cl.: G06Q 10/06, G06Q 10/0631, G06Q 30/018, G06Q 50/06

(54) **INFORMATION PROCESSING DEVICE, RECRUITMENT METHOD, COMPUTER PROGRAM, AND STORAGE MEDIUM**

(30) Priority: 16.10.2024 JP 2024180927
(71) Applicant: Panasonic Intellectual Property Management Co., Ltd., Kadoma-shi, Osaka 571-0057 (JP)
(72) Inventor: OHTA, Kohei, Kadoma-shi, Osaka, 571-0057 (JP); OTSUKA, Kyoko, Kadoma-shi, Osaka, 571-0057 (JP); OGAMI, Naoki, Kadoma-shi, Osaka, 571-0057 (JP)
(74) Representative: Eisenführ Speiser

(57) **Abstract**

The information processing device is configured to recruit a participant of an environmental contribution project from a user of a home appliance. The information processing device includes at least one of a communication unit or a storage unit, each being configured to acquire user information including model information or energy efficiency of a home appliance, and a control unit that controls the at least one of the communication unit or the storage unit. The control unit acquires the user information, determines whether the user is able to participate in the environmental contribution project based on the user information, and outputs a first notification including information regarding participation in the environmental contribution project in a case where it is determined that the user is able to participate in the environmental contribution project.

## Description

### BACKGROUND

### 1. Technical Field

The present disclosure relates to an information processing device, a recruitment method, a computer program, and a storage medium for recruiting participants in an environmental contribution project from users of home appliances.

### 2. Description of the Related Art

In recent years, in order to prevent global warming, various measures have been taken to reduce the emission of greenhouse gas such as carbon dioxide. For example, there is known a "J-credit system" in which Japan certifies, as a "credit", a reduction amount or an absorption amount of the emission of greenhouse gas by introduction of energy saving equipment, forest management, or the like.

In such measures, a generation device that generates a report of an effect on environmental contribution such as a reduction amount of the emission of greenhouse gas for participants of an environmental contribution project is known. For example, PTL 1 discloses an environmental contribution effect report generation device that generates a report on an environmental contribution effect due to introduction of equipment.

### Citation List

### Patent Literature

PTL 1: Unexamined Japanese Patent Publication No. 2021-149241

### SUMMARY

Although PTL 1 accepts a participation request from a user, there is room for improvement in recruitment of participants.

The present disclosure provides an information processing device, a recruitment method, a computer program, and a storage medium that can recruit participants for an environmental contribution project from users of home appliances.

An information processing device according to an aspect of the present disclosure is configured to recruit a participant of an environmental contribution project from a user of a home appliance. The information processing device includes at least one of a communication unit or a storage unit, each being configured to acquire user information including model information or energy efficiency of a home appliance, and a control unit that controls the at least one of the communication unit or the storage unit. The control unit acquires the user information, determines whether the user is able to participate in the environmental contribution project based on the user information, and outputs a first notification including information regarding participation in the environmental contribution project in a case where it is determined that the user is able to participate in the environmental contribution project.

In addition, a recruitment method according to another aspect of the present disclosure is a recruitment method of participants in an environmental contribution project from users of home appliances. The recruitment method includes a step of acquiring user information including model information or energy efficiency of the home appliance. Furthermore, the recruitment method includes a step of determining whether the user is able to participate in the environmental contribution project based on the user information. Furthermore, the recruitment method includes a step of outputting a first notification including information regarding participation in the environmental contribution project in a case where the user is determined to be able to participate.

In addition, a computer program according to another aspect of the present disclosure is a computer program for causing an information processing device to execute the recruitment method described above.

A non-transitory computer-readable storage medium according to another aspect of the present disclosure is a non-transitory computer-readable storage medium having stored therein a computer program for causing a processor to implement the above recruitment method.

According to the information processing device, the recruitment method, the computer program, and the storage medium of the present disclosure can recruit participants of an environmental contribution project from users of home appliances.

### BRIEF DESCRIPTION OF THE DRAWINGS

Fig. 1 is a block diagram of an example of an information processing device according to a first exemplary embodiment;
Fig. 2 is a flowchart of an example of a recruitment method in the first exemplary embodiment;
Fig. 3 is a flowchart of an example of step S200 in the first exemplary embodiment;
Fig. 4 is a flowchart of an example of step S200 in the first exemplary embodiment;
Fig. 5 is a flowchart of an example of step S200 in the first exemplary embodiment;
Fig. 6 is a flowchart of an example of the recruitment method in the first exemplary embodiment;
Fig. 7 is a flowchart of an example of the recruitment method in a second exemplary embodiment;
Fig. 8 is a sequence diagram of an example of a recruitment method according to the second exemplary embodiment;
Fig. 9 is a block diagram of an example of an information processing device according to a third exemplary embodiment; and
Fig. 10 is a sequence diagram of an example of a recruitment method according to the third exemplary embodiment.

### DETAILED DESCRIPTIONS

### <<Technical concept>>

An information processing device, a recruitment method, a computer program, and a storage medium of the present disclosure can recruit participants of an environmental contribution project from users of home appliances. Prior to describing specific exemplary embodiments of the information processing device, the recruitment method, the computer program, and the storage medium according to the present disclosure, first, a technical concept described in the present disclosure will be described with reference to an example.

First, the environmental contribution project is a project related to creation of environmental value. More specifically, the environmental contribution project is, for example, an activity for protecting the global environment by participating in a system that authenticates a reduction amount of the emission of greenhouse gas such as carbon dioxide as a carbon credit. In the present disclosure, as the environmental contribution project, a project registered in the J-credit system will be mainly described as an example, but the present disclosure is not limited thereto. The environmental contribution project may be a project by another system in Japan or a project by a system related to environmental contribution in another country. For example, a user who uses home appliances at home can participate in the environmental contribution project.

In this example, a server that makes communication connection with the home appliance via the Internet executes the recruitment method as the information processing device. After the user purchases a new home appliance, the user can connect the new home appliance to a server and register the new home appliance in order to exhibit a function related to Internet of Things (loT).

The server acquires user information related to the home appliance or the user thereof from various connected home appliances. The server connected to the home appliance can determine whether the user who has purchased the home appliance is able to participate in the environmental contribution project. In this example, the server acquires the energy efficiency of the new home appliance from the user information, and determines participation/non-participation of the user based on the energy efficiency. The energy efficiency may be, for example, the annual performance factor (APF) defined by the J-credit system and Japanese Industrial Standard (JIS) C9612.

When it is determined that the energy efficiency is a predetermined reference value (baseline) or more, the server determines that the user is able to participate, and outputs a first notification including information regarding participation in the environmental contribution project. In a case where the user views the first notification and wants to participate in the environmental contribution project, the user can apply for the environmental contribution project based on the information regarding the participation. That is, the server selects users who are able to participate in the environmental contribution project, and then, invites the selected users to participate in the environmental contribution project. In this way, participants can be actively recruited. If a positive determination result indicating that participation is possible is displayed to the user, participation in the environmental contribution project can be further encouraged. In addition, since the applicants for the environmental contribution project are selected users, it is not necessary to examine the qualification of participation again when receiving the participation request from the applicants, and it is possible to save or reduce the time and effort of the examination.

Each of the exemplary embodiments described below illustrates an example of the present disclosure. Numerical values, shapes, configurations, steps, and orders of the steps, and the like illustrated in each of the following exemplary embodiments are merely examples, and thus are not intended to limit the present disclosure. Among the constituent elements in the following first exemplary embodiment, constituent elements not recited in the independent claim indicating the highest concept are described as optional constituent elements.

In each of the exemplary embodiments to be described below, modifications may be illustrated for specific elements, and an appropriate combination of any configurations is included for other elements, and each effect is achieved in the combined configuration. In the exemplary embodiments, the configurations of the modifications are combined, whereby the effects of the modifications are obtained.

In the following detailed description, the terms "first", "second", and the like are only used for description, and should not be understood as explicitly or implying relative importance or a rank of a technical feature. Features limited to "first" and "second" are intended to explicitly or implicitly indicate inclusion of one or more of the features.

### <<First exemplary embodiment>>

Hereinafter, a first exemplary embodiment of an information processing device, a recruitment method, a computer program, and a storage medium according to the present disclosure will be described in detail with reference to the drawings as appropriate.

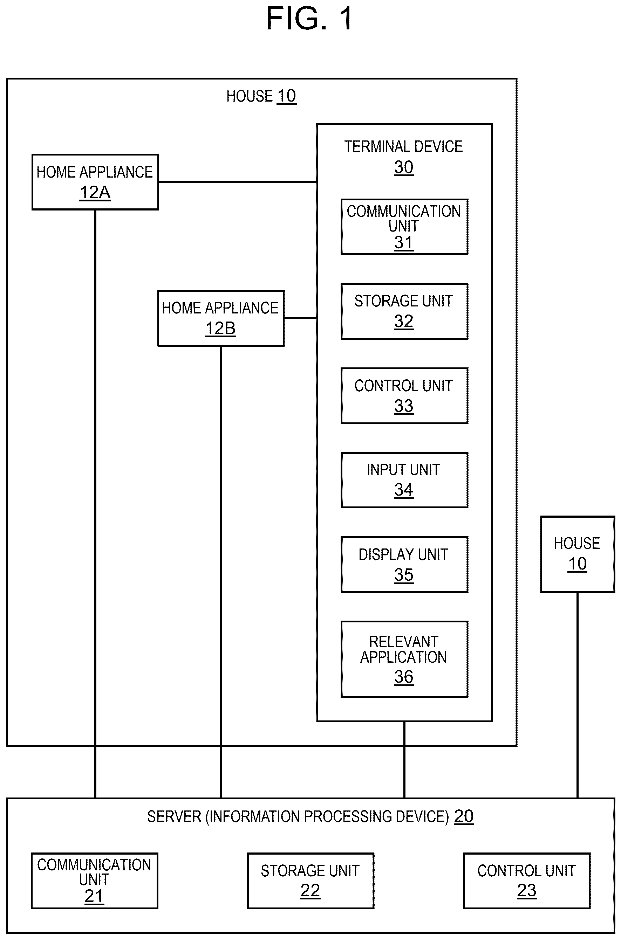

Fig. 1 is a block diagram of an example of the information processing device according to the first exemplary embodiment. In the example of Fig. 1, home appliance 12A and home appliance 12B (hereinafter, the home appliances may be collectively referred to as home appliance 12) are provided in house 10. The information processing device is a device that recruits participants in an environmental contribution project from the users of at least one home appliance 12. The information processing device, for example, recruits participants in the environmental contribution project from respective users of a plurality of home appliances 12 provided in a plurality of houses 10. In the first exemplary embodiment, server 20 capable of communication connection with home appliance 12 operates as the information processing device and executes the recruitment method.

Server 20 can also be communicably connected to home appliance 12 and terminal device 30 of at least one house 10 via the Internet. Terminal device 30 can be communicably connected to home appliance 12, and may be, for example, a controller of home appliance 12 or a smartphone of a user of home appliance 12. Terminal device 30 may be further communicably connected to server 20 via the Internet.

Hereinafter, an outline of each constituent element will be described.

### <Home appliance 12>

The home appliance is an abbreviation of an electric product used in a household. Home appliance 12 is, for example, an electric appliance such as a television, a refrigerator, an air conditioner, a washing machine, a cleaning robot, an acoustic device, a lighting, a water heater, and an intercom used at home.

Home appliance 12 consumes power and exerts inherent functions such as a cooling function, a heating function, a washing function, a freezing function, and an illumination function. The ability to exhibit the inherent function of home appliance 12 can be calculated as energy efficiency. In the present disclosure, the energy efficiency of home appliance 12 is an index (numerical value) representing an ability to exhibit an inherent function of home appliance 12, and relates to power consumption of home appliance 12 in the first period. That is, the energy efficiency represents energy saving performance of home appliance 12. Examples of the energy efficiency include an annual performance factor (APF), an integrated part load value (IPLV), or a seasonal energy efficiency ratio (SEER). The first period used for defining the energy efficiency may vary depending on the type of index, and may be, for example, one year, six months, three months, one month, one day, or one hour. For different home appliances 12, different indices may be adopted as the energy efficiency depending on the type of home appliance 12. Hereinafter, as the energy efficiency, the APF will be mainly described as an example, but the energy efficiency is not limited to the APF.

In general, the energy efficiency of home appliance 12 is a fixed value for its inherent function. For example, home appliance 12 which is an air conditioner may have an APF representing energy saving performance during cooling and an APF representing energy saving performance during heating. It is possible to specify the energy efficiency of home appliance 12 from the model and identification information of home appliance 12.

### <Server 20>

Server 20 is communicably connected to home appliance 12 or terminal device 30 that can be communicably connected to home appliance 12 in order to recruit participants of the environmental contribution project from the user of home appliance 12. In addition, server 20 may be a server for managing home appliance 12, or may be a management server or an application server of a manufacturer of home appliance 12 or terminal device 30 for collecting data from home appliance 12.

Server 20 can transfer the user information and the control command received from terminal device 30 to home appliance 12 via the Internet, and can also transfer the operation information received from home appliance 12 to terminal device 30. Furthermore, server 20 can output a notification related to the environmental contribution project to home appliance 12 or terminal device 30, and cause home appliance 12 or terminal device 30 to display the output notification to the user. Server 20 includes communication unit 21, storage unit 22, and control unit 23.

### <Communication unit 21>

Communication unit 21 can also communicate with at least one of home appliance 12 and terminal device 30 via a network, and can also transmit and receive Internet packets, for example. Among server 20, home appliance 12, and terminal device 30, communication unit 21 of server 20 may perform communication according to standards such as Wireless Fidelity (Wi-Fi) (registered trademark), IEEE802.2, IEEE802.3, 3G, Long Term Evolution (LTE), Intranet, Extranet, Local Area Network (LAN), Integrated Services Digital Network (ISDN), Value Added Network (VAN), Community Antenna Television (CATV) communication network, virtual dedicated network, telephone network, mobile communication network, satellite communication network or the like, infrared, and Bluetooth (registered trademark) and transmit and receive data.

### <Storage unit 22>

Storage unit 22 is a recording medium that records various pieces of information and control programs, and may be a memory that functions as a work area of control unit 23. Storage unit 22 is implemented by, for example, a flash memory, a random access memory (RAM), a read only memory (ROM), another storage device, or an appropriate combination thereof.

Storage unit 22 may store at least one determination criterion for determining participation/non-participation in the environmental contribution project. For example, storage unit 22 stores first to fourth criteria to be described later, and reference values and thresholds used for the criteria. In the case of being registered for cooperation with home appliance 12 or terminal device 30, storage unit 22 may store user information related to home appliance 12, terminal device 30, or the user thereof. In one example, the user information includes model information or energy efficiency of home appliance 12. In another example, the user information further includes identification information of the user and identification information of home appliance 12.

Storage unit 22 may store participant information related to participants of the environmental contribution project. The participant information may include at least some of the user information of the participants of the environmental contribution project. The user information and the participant information can be stored in a database. Information such as the determination criterion and the user information can be read by control unit 23 when control unit 23 performs the recruitment method.

Storage unit 22 may store a computer program for causing control unit 23 to execute the recruitment method of the present disclosure. Storage unit 22 may be a non-transitory computer-readable storage medium storing a computer program.

### <Control unit 23>

Control unit 23 is a controller that controls at least some functions of server 20, and controls communication unit 21 and storage unit 22. Control unit 23 can include a general-purpose processor such as a central processing unit (CPU) that realizes a predetermined function by executing a program, a micro processing unit (MPU), a micro controller unit (MCU), a field programmable gate array (FPGA), a digital signal processor (DSP), or an application specific integrated circuit (ASIC). Control unit 23 can realize various controls in home appliance 12 by calling and executing a control program stored in storage unit 22. In addition, control unit 23 can read/write data stored in storage unit 22 in cooperation with storage unit 22. Control unit 23 is not limited to one that implements a predetermined function through cooperation of hardware and software, but control unit 23 may be a hardware circuit designed exclusively for implementing a predetermined function. (Control unit 23 of) Server 20 can be implemented as the information processing device of the present disclosure, and can execute the recruitment method of the present disclosure.

### <Terminal device 30>

Terminal device 30 is a device related to home appliance 12. Terminal device 30 may be, for example, a controller of a single home appliance 12, or may be a controller capable of managing and controlling a plurality of types of home appliances 12. Terminal device 30 may be an information terminal that can perform data communication with server 20, for example, a smartphone, a cellular phone, a mobile phone, a tablet, a wearable device, a computer, or the like with built-in dedicated relevant application 36.

Terminal device 30 includes communication unit 31, storage unit 32, control unit 33, input unit 34, and display unit 35. In a case where terminal device 30 is an information terminal such as a smartphone, terminal device 30 may further include related application 36 used to manage home appliance 12.

Similarly to communication unit 21 of server 20, communication unit 31 of terminal device 30 can communicate with home appliance 12 or server 20 according to various communication standards to transmit and receive data. For example, communication unit 31 may be directly connected to home appliance 12 via Bluetooth (registered trademark) or Wi-Fi (registered trademark), or may be connected to home appliance 12 and server 20 via the Internet.

Similarly to storage unit 22 of server 20, storage unit 32 of terminal device 30 is a recording medium that records various types of information and control programs, and may be a memory that functions as a work area of control unit 33 of terminal device 30.

Control unit 33 of terminal device 30 is a controller that controls at least some functions of terminal device 30, and includes a general-purpose processor that realizes a predetermined function by executing a program.

Input unit 34 is a device for acquiring user information such as user identification information, and the user can input the user information to terminal device 30 via input unit 34. Input unit 34 may include at least one of a button, a keyboard, and a touch panel.

Display unit 35 is for displaying information in at least one of numerical values, characters, and images. Display unit 35 may include a display for presenting a graphical user interface (GUI). Terminal device 30 can receive a notification related to the environmental contribution project from server 20 and display the notification to the user via display unit 35.

The configurations of server 20 (information processing device), home appliance 12, and terminal device 30 according to the first exemplary embodiment have been schematically described above. Hereinafter, a recruitment method executed by server 20 as the information processing device will be described.

### <Recruitment method>

The recruitment method of the present disclosure is a method for recruiting participants in an environmental contribution project from users of home appliances 12. In an example, the recruitment method is performed when server 20 is connected to new home appliance 12 and registers new home appliance 12. Here, new home appliance 12 may include not only a home appliance newly purchased by the user but also all home appliances not registered in server 20 after purchase. In another example, the recruitment method is periodically performed on home appliances 12 that are not registered in the environmental contribution project.

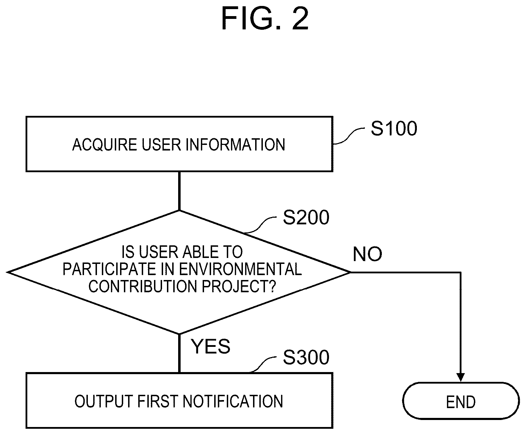

Fig. 2 is a flowchart of a recruitment method according to the first exemplary embodiment, the recruitment method including steps S100 to S300.

First, control unit 23 of server 20 as the information processing device acquires user information (step S100). The user information includes model information or energy efficiency of home appliance 12. Control unit 23 can acquire the user information from home appliance 12 or terminal device 30 via communication unit 21. In a case where the user information is already stored in storage unit 22, control unit 23 can acquire the user information by reading the user information from storage unit 22. That is, server 20 as the information processing device includes communication unit 21 or storage unit 22 capable of acquiring the model information or the user information including the energy efficiency of home appliance 12.

Next, control unit 23 determines whether the user is able to participate in the environmental contribution project based on the user information (step S200). Control unit 23 can determine participation/non-participation of the user by using at least one determination criterion.

For example, control unit 23 specifies the energy efficiency of home appliance 12 from the user information, and determines participation/non-participation based on at least the energy efficiency. In order to participate in the environmental contribution project, the energy efficiency representing the energy saving performance must be a predetermined reference value (baseline) or more. The baseline is a value indicating energy efficiency as a reference for calculating the reduction amount of the emission of carbon dioxide, and is defined by a system (for example, the J-credit system) followed by the environmental contribution project. In one example, in a case where control unit 23 determines that the energy efficiency of home appliance 12 is equal to or higher than the prescribed baseline, the control unit determines that the user of home appliance 12 is able to participate in the environmental contribution project.

In a case where it is determined that the user is able to participate in the environmental contribution project (step S200: YES), control unit 23 outputs a first notification including information regarding participation in the environmental contribution project (step S300). For example, in a case where the user information includes the identification information of the user and the identification information of terminal device 30 of the user, control unit 23 may specify the user and terminal device 30 by using the user information and transmit the first notification to terminal device 30. Furthermore, control unit 23 may transmit the first notification to home appliance 12, or may transmit the first notification to terminal device 30 via home appliance 12. Terminal device 30 or home appliance 12 displays the received first notification to the user.

Note that, in a case where home appliance 12 is associated with a plurality of users, control unit 23 may transmit the first notification to all the users associated with home appliance 12. In this case, storage unit 22 stores the association between each home appliance 12 and the user. In other words, in storage unit 22, the information regarding home appliance 12 can be stored in association with all the users of home appliance 12. In step S300, control unit 23 may specify all the users of home appliance 12 and terminal devices 30 by collating storage unit 22 with the identification information of home appliance 12, and transmit the first notification to all specified terminal devices 30.

The information regarding participation is information for applying for participation in the environmental contribution project, and may include, for example, a uniform resource locator (URL), a form, a quick response (QR) code (registered trademark), and the like for application for participation. The first notification may further include description of the environmental contribution project and the system followed by the environmental contribution project so as to encourage participation. Furthermore, the first notification may include a determination result indicating that the user is able to participate so as to encourage participation.

On the other hand, in a case where it is determined in step S200 that the energy efficiency of home appliance 12 is lower than the baseline, it is determined that the user of home appliance 12 is unable to participate in the environmental contribution project. In a case where it is determined that the user is unable to participate (step S200: NO), control unit 23 completes the recruitment method without outputting the first notification.

### <Determination criteria in participation>

Hereinafter, the determination criterion used when the participation is determined in step S200 will be described in more detail. Note that the contents of the determination criteria can be defined by the environmental contribution project or the system followed by the environmental contribution project, and are not limited to the following examples.

In one example, the determination criteria include a first criterion and a second criterion related to energy efficiency. The first and second criteria define different baselines for energy efficiency. However, server 20 may determine participation/non-participation using one baseline or three or more baselines.

In this example, the first criterion means that, in a case where home appliance 12 is newly installed, the energy efficiency is equal to or higher than the energy efficiency reference value. That is, the first criterion corresponds to a case where home appliance 12 is not installed in house 10 but is a newly installed home appliance. The baseline defined in the first criterion is an energy efficiency reference value determined in advance in the environmental contribution project. The energy efficiency reference value may be, for example, a predetermined APF determined by the operator of the environmental contribution project in accordance with the top runner system in Japan.

On the other hand, the second criterion means that, in a case where home appliance 12 is to be updated (replaced), the energy efficiency is equal to or higher than the energy efficiency of the home appliance before the update. That is, the second criterion corresponds to a case where home appliance 12 is a home appliance obtained by replacing the same type of home appliance provided in house 10. The baseline defined in the second criterion is the energy efficiency of the home appliance before the update provided in house 10, and may be, for example, the APF of the home appliance before the update.

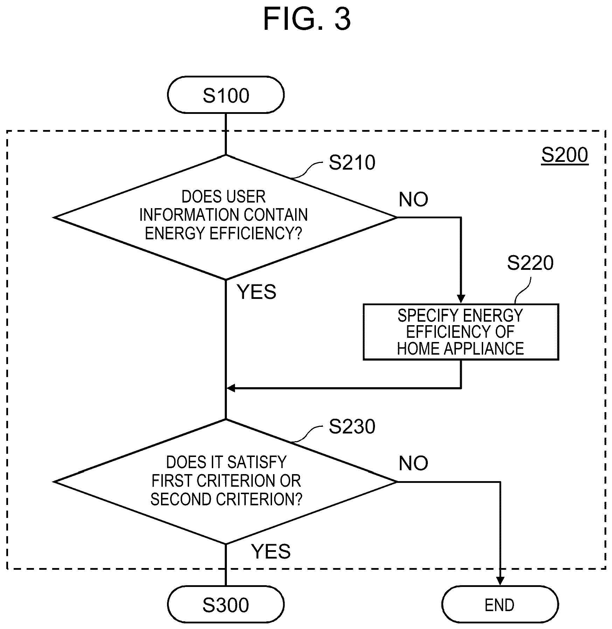

In step S200, control unit 23 of server 20 determines participation/non-participation by using the first criterion or the second criterion. Fig. 3 is a flowchart of an example of step S200 according to the first exemplary embodiment. In the example shown in Fig. 3, step S200 includes steps S210 to S230.

In step S200, control unit 23 determines whether the user information includes energy efficiency (step S210). In a case where the user information includes the model information of home appliance 12 but does not include the energy efficiency of home appliance 12 (step S210: NO), control unit 23 specifies the energy efficiency of home appliance 12 based on the model information of home appliance 12 (step S220). The model information of home appliance 12 may be, for example, a model name or a model number. In this case, storage unit 22 stores a comparison table or a database including the model information and the energy efficiency corresponding to the model information for various home appliances. Control unit 23 can specify the energy efficiency of home appliance 12 by collating the comparison table or the database with the model information of home appliance 12.

When the energy efficiency is specified from the user information, control unit 23 determines whether the first criterion or the second criterion is satisfied based on the energy efficiency (step S230). That is, control unit 23 determines whether the energy efficiency of home appliance 12 is equal to or higher than the energy efficiency reference value or equal to or higher than the energy efficiency of the home appliance before the update.

In one example, the user information includes category information indicating that home appliance 12 is newly installed or updated. In a case where the category information indicates new installation, control unit 23 determines whether the first criterion is satisfied in step S230. Similarly, in a case where the category information indicates the update, control unit 23 determines whether the second criterion is satisfied in step S230. In a case where it is determined that the determination criterion corresponding to the category information is satisfied (step S230: YES), control unit 23 determines that the user of home appliance 12 is able to participate in the environmental contribution project (step S200 in Fig. 1: YES). On the other hand, in a case where it is determined that the determination criterion corresponding to the category information is not satisfied (step S230: NO), it is determined that the user of home appliance 12 is unable to participate in the environmental contribution project (step S200 in Fig. 1: NO).

In another example, in step S230, control unit 23 determines whether at least one of the first criterion and the second criterion is satisfied. In a case where it is determined that at least one of the first criterion and the second criterion is satisfied (step S230: YES), control unit 23 determines that the user of home appliance 12 is able to participate in the environmental contribution project (step S200 in Fig. 1: YES). On the other hand, in a case where it is determined in step S230 that both the first criterion and the second criterion are not satisfied (step S230: NO), it is determined that the user of home appliance 12 is unable to participate in the environmental contribution project (step S200 in Fig. 1: NO). In a case where it is determined that the user is unable to participate (step S200 in Fig. 1: NO), control unit 23 completes the recruitment method without outputting the first notification.

As described above, server 20 can determine whether participation in the environmental contribution project is possible by using the energy efficiency of home appliance 12 and at least one of the first criterion and the second criterion. In this way, it is possible to determine participation/non-participation based on the determination criteria defining different baselines.

In one example, some new home appliances can participate in the environmental contribution project according to the system followed by the environmental contribution project. In this example, the determination criteria further include a third criterion. The third criterion is that a predetermined period (hereinafter, also referred to as a "second period") has not elapsed from the operation start date of home appliance 12.

In this example, the user information includes the operation start date of home appliance 12. The operation start date may be, for example, a date on which construction for attaching home appliance 12 to house 10 is completed, or may be a date on which the operation actually starts after the attachment is completed. The operation start date may be input by the user when home appliance 12 is registered in server 20, or may be acquired by server 20 inquiring the user via terminal device 30. In addition, for example, the user transmits a "construction completion report" or a "contract" related to construction for attaching home appliance 12 to server 20 via terminal device 30. Server 20 can extract the operation start date of home appliance 12 from these pieces of data, and store the extracted operation start date in storage unit 22 as a part of the user information.

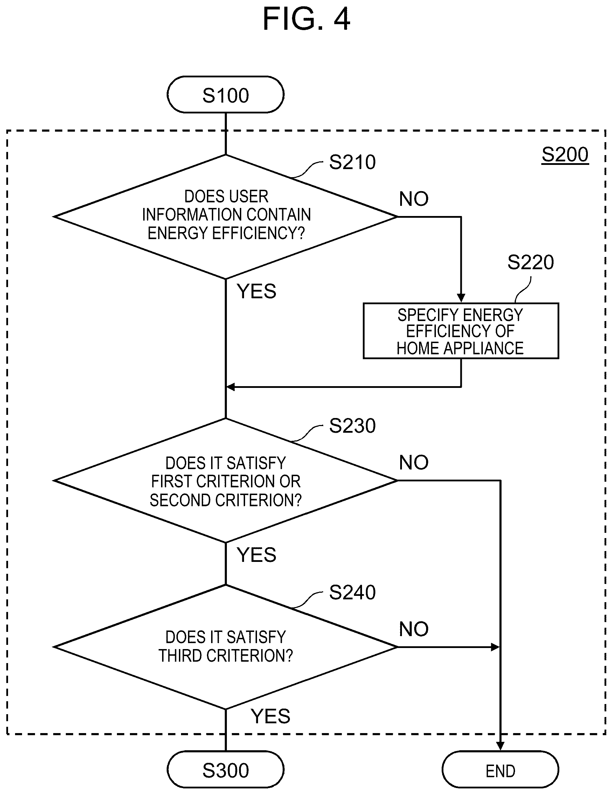

Fig. 4 is a flowchart of an example of step S200 in the first exemplary embodiment. In the example shown in Fig. 4, step S200 includes steps S210 to S240. Steps S210 to S230 in Fig. 4 are the same as the contents of steps S210 to S230 in Fig. 3, and details are omitted herein.

In step S200, control unit 23 acquires the operation start date of home appliance 12 from the user information, and determines whether the third criterion is satisfied based on the operation start date (step S240). Here, control unit 23 determines whether the second period has not elapsed from the operation start date of home appliance 12, that is, whether the period from the operation start date of home appliance 12 to the current time point is shorter than the second period. The second period may be, for example, one year, two years, three years, five years, or six years.

In a case where it is determined that the second period has not elapsed from the operation start date of home appliance 12, that is, the third criterion is satisfied (step S240: YES), control unit 23 determines that the user of home appliance 12 is able to participate in the environmental contribution project (step S200 in Fig. 2: YES). On the other hand, in a case where it is determined in step S240 that the third criterion is not satisfied (step S240: NO), it is determined that the user of home appliance 12 is unable to participate in the environmental contribution project (step S200 in Fig. 2: NO). In a case where it is determined that the user is unable to participate, control unit 23 completes the recruitment method without outputting the first notification.

As described above, server 20 can determine whether participation in the environmental contribution project is possible by using the operation start date of home appliance 12 and the third criterion. In this way, the participation/non-participation can be determined based on the criterion related to the operation start date of home appliance 12.

In one example, according to the system followed by the environmental contribution project, one home appliance 12 can participate in one environmental contribution project once. For example, even if different users in the same house 10 separately apply for participation in the environmental contribution project using the same home appliance 12, only one participation application (generally, earlier application) is permitted. In addition, even if the user separately applies for participation in different environmental contribution projects using the same home appliance 12, only one participation application is permitted. That is, overlapping participation by the same home appliance 12 is not allowed.

In this example, the determination criterion further includes a fourth criterion. The fourth criterion is that the identification information of home appliance 12 is not registered in the participant information. In addition, the user information further includes identification information of home appliance 12, and the participant information includes identification information of home appliance 12 participating in the environmental contribution project. That is, the participant information includes user information of the participant of the environmental contribution project. In one example, storage unit 22 maintains a database of participant information of each environmental contribution project for the environmental contribution project.

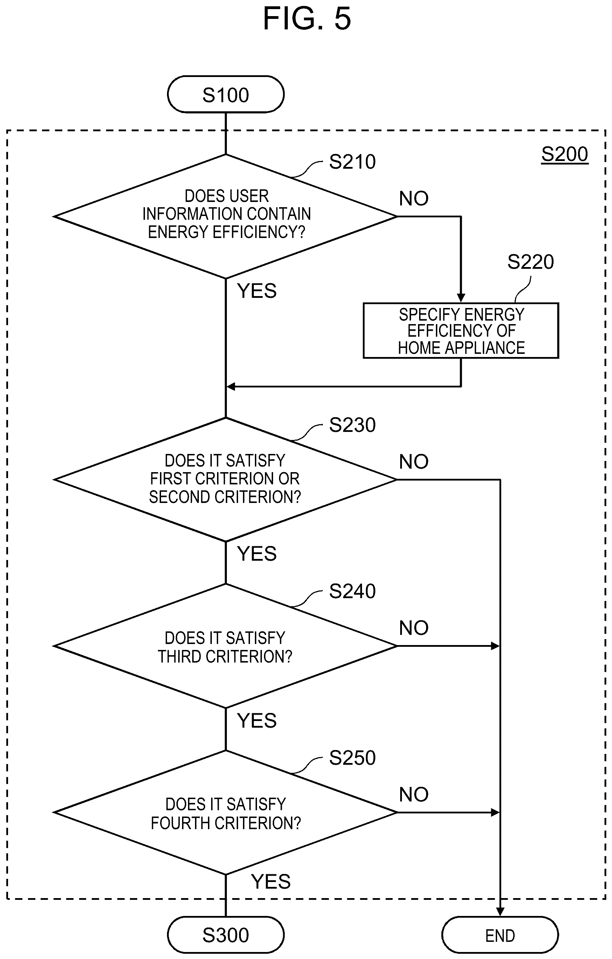

Fig. 5 is a flowchart of an example of step S200 in the first exemplary embodiment. In the example shown in Fig. 5, step S200 includes steps S210 to S250. Steps S210 to S240 in Fig. 5 are the same as the contents of steps S210 to S240 in Fig. 4, and details are omitted herein.

In step S200, control unit 23 acquires the identification information of home appliance 12 from the user information, and determines whether the fourth criterion is satisfied based on the identification information of home appliance 12 (step S250). Here, control unit 23 can determine whether the identification information of home appliance 12 is not registered by collating the database of the participant information with the identification information of home appliance 12.

In a case where it is determined that the identification information of home appliance 12 is not registered in the participant information, that is, the fourth criterion is satisfied (step S250: YES), control unit 23 determines that the user of home appliance 12 is able to participate in the environmental contribution project (step S200 in Fig. 2: YES). On the other hand, in a case where it is determined in step S250 that the fourth criterion is not satisfied (step S250: NO), it is determined that the user of home appliance 12 is unable to participate in the environmental contribution project (step S200 in Fig. 2: NO). In a case where it is determined that the user is unable to participate, control unit 23 completes the recruitment method without outputting the first notification.

In step S200, control unit 23 may perform determination based on the fourth criterion without determination based on the third criterion. That is, control unit 23 may not execute step S240 in Fig. 5.

As described above, server 20 can determine whether participation in the environmental contribution project is possible by using the identification information of home appliance 12 and the fourth criterion. In this way, overlapping participation by the same home appliance 12 can be avoided.

### <Contents of first notification>

As described above, in step S300 of Fig. 2, control unit 23 outputs the first notification including the information regarding the participation to terminal device 30 or home appliance 12 of the user determined to be able to participate. The first notification may include description of the environmental contribution project and the system followed by the environmental contribution project, and may also include a determination result that participation is possible. Furthermore, the first notification may include information for encouraging participation in the environmental contribution project and a proposal for participation.

In one example, the first notification includes a reduction estimation value related to the environmental contribution information created by home appliance 12 over a predetermined period (hereinafter, also referred to as a "third period").

The environmental contribution information is information indicating how much the carbon dioxide emission amount has been reduced by the environmental contribution project. That is, the environmental contribution information indicates a contribution actually created by home appliance 12 participating in the environmental contribution project. On the other hand, the reduction estimation value is an estimation value indicating how much the carbon dioxide emission amount can be reduced by the environmental contribution project in a case where home appliance 12 that has not yet participated in the environmental contribution project participates in the environmental contribution project.

In this example, in a case where it is determined that the user is able to participate, control unit 23 calculates a reduction estimation value based on the energy efficiency of home appliance 12 and adds the reduction estimation value to the first notification. The reduction estimation value can be calculated by the same calculation method as the environmental contribution information. The third period for calculating the reduction estimation value may be the same as the first period or may be different depending on the type of energy efficiency. For example, the third period may be one year, six months, three months, one month, one day, or one hour.

More specifically, in a case where the user information does not include energy efficiency, control unit 23 specifies the energy efficiency of home appliance 12 based on the model information of home appliance 12. The calculation criteria for calculating the reduction estimation value may be the same as a predetermined reference value (baseline) for determining whether participation in the environmental contribution project is possible. In this case, control unit 23 calculates the reduction estimation value using the same baseline as the first criterion and the second criterion described above as the calculation criterion. For example, control unit 23 calculates the reduction estimation value based on the energy efficiency of home appliance 12 and the energy efficiency reference value or the energy efficiency of the home appliance before the update.

In order to calculate the reduction estimation value, control unit 23 assumes the operation information of home appliance 12 over the third period. For example, the assumed operation information may include assumed power consumption over the third period. Control unit 23 calculates the reduction estimation value based on the energy efficiency of home appliance 12, the baseline, and the assumed operation information.

In one example, the assumed power consumption is an average power consumption value of home appliance 12. The average power consumption value of home appliance 12 may be acquired by an experiment conducted by a manufacturer or the like of home appliance 12, or may be an average value calculated from a power consumption value when another user uses the same home appliance.

In another example, the assumed power consumption is past measured power consumption by the user of home appliance 12. For example, home appliance 12 is updated, and the assumed power consumption may be an average value calculated from an actual power consumption value when the home appliance before the update is used.

In the following example, control unit 23 calculates a first environmental contribution calculation value based on the assumed operation information, and calculates a second environmental contribution calculation value based on the assumed operation information, the energy efficiency (APF) of home appliance 12, and the baseline. Control unit 23 calculates a reduction estimation value of home appliance 12 by subtracting the first environmental contribution calculation value from the second environmental contribution calculation value.

Control unit 23 acquires the assumed power consumption based on the assumed operation information, and calculates the first environmental contribution calculation value by multiplying the assumed power consumption by a predetermined carbon dioxide emission coefficient. Specifically, a first environmental contribution calculation value EM1 can be calculated by an expression of EM1 = EL × CEF based on the assumed power consumption amount EL (Electricity Load) in the third period and the carbon dioxide emission coefficient CEF (Carbon Emission Factor). The carbon dioxide emission coefficient CEF (CO2 emission coefficient) is an index indicating the amount of carbon dioxide emitted for supplying 1 kWh of electricity, and the unit is "kg-CO2/kWh". In a case where home appliance 12 uses, for example, electricity supplied by an electric utility, a carbon dioxide emission coefficient determined for each electric utility is used.

Next, control unit 23 calculates the second environmental contribution calculation value by multiplying the calculated first environmental contribution calculation value by a predetermined coefficient indicating a ratio between the APF (APF1) of home appliance 12 and the APF (APF2) of the baseline. Predetermined coefficient ε can be calculated by an expression ε = APF1/APF2 based on the APF1 of home appliance 12 and the APF2 of the baseline. Based on first environmental contribution calculation value EM1 and predetermined coefficient ε, second environmental contribution calculation value EM2 can be calculated by an expression of EM2 = EM1 × ε. In this example, control unit 23 calculates second environmental contribution calculation value EM2 by multiplying first environmental contribution calculation value EM1 by predetermined coefficient ε, with predetermined coefficient ε as the ratio of the APF1 of home appliance 12 to the APF2 of the baseline.

Control unit 23 can calculate a reduction estimation value of home appliance 12 by subtracting the first environmental contribution calculation value from the second environmental contribution calculation value. Specifically, environmental contribution information ER can be calculated by an equation ER = EM2 - EM1 based on first environmental contribution calculation value EM1 and second environmental contribution calculation value EM2. A difference between the first environmental contribution calculation value in a case where home appliance 12 is used and the second environmental contribution calculation value of the baseline indicates a carbon dioxide emission amount that can be reduced in a case where home appliance 12 participates in the environmental contribution project.

In another example, control unit 23 calculates a plurality of reduction estimation values based on a plurality of baselines, sets the largest one of the calculated reduction estimation values as a final reduction estimation value, and adds the final reduction estimation value to the first notification.

For example, control unit 23 sets the reduction estimation value calculated based on the baseline (energy efficiency reference value) corresponding to the first criterion as a first estimation value, and sets the reduction estimation value calculated based on the baseline (energy efficiency of the home appliance before update) corresponding to the second criterion as a second estimation value. That is, control unit 23 calculates the first estimation value based on the energy efficiency of home appliance 12 and the energy efficiency reference value, and calculates the second estimation value based on the energy efficiency of home appliance 12 and the energy efficiency of the home appliance before the update. Then, control unit 23 sets the larger one of the first estimation value and the second estimation value as the final reduction estimation value.

By displaying the reduction estimation value to the user via the first notification, it is possible to make the user interested in participation in the environmental contribution project and encourage the user to participate in the environmental contribution project.

In one example, the first notification includes a first proposal related to a participation category to the environmental contribution project. The participation category includes a first category and a second category different from the first category, and each category corresponds to a different calculation criterion (baseline). For example, the first category indicates that home appliance 12 is newly installed, and corresponds to the baseline of the energy efficiency reference value. The second category indicates that home appliance 12 is to be updated, and corresponds to a baseline of energy efficiency of the home appliance before the update.

In this example, the first estimation value and the second estimation value respectively correspond to the first category and the second category. That is, the first estimation value is a reduction estimation value in a case where home appliance 12 participates in the environmental contribution project in the first category (newly installed), and the second estimation value is a reduction estimation value in a case where home appliance 12 participates in the environmental contribution project in the second category (updated).

In a case where the first estimation value is larger than the second estimation value, control unit 23 sets the first category as the first proposal, and in a case where the second estimation value is larger than the first estimation value, the control unit sets the second category as the first proposal. For example, in a case where the first estimation value is larger than the second estimation value, the first notification may include a first proposal that "It is recommended that you participate in the project in a new category".

In a case where the first estimation value and the second estimation value are the same, control unit 23 may not propose the reference category, and may propose either the first category or the second category.

In this way, it is possible to determine the calculation criterion in which the reduction estimation value becomes relatively large and propose the participation category advantageous for the user.

In one example, the first notification includes at least one option of the way of using the profit created by the environmental contribution information by home appliance 12.

As described above, the environmental contribution information indicates how much carbon dioxide emission amount could be reduced by the environmental contribution project if home appliance 12 participates in the environmental contribution project. That is, the environmental contribution information represents a contribution created by home appliance 12 participating in the environmental contribution project.

The profit created by the environmental contribution information refers to the profit obtained by the environmental contribution project by selling the carbon dioxide emission amount reduced in the environmental contribution project as a credit. The way of using the profit indicates what kind of activity the profit is to be invested in the environmental contribution project. For example, regarding the way of using the profit, there may be options such as tree planting activities, contributions to environmental groups, development of more efficient energy saving products, product recycling activities, and promotion of zero carbon dioxide plant expansion.

The options selectable by the user may be defined by the operator of the environmental contribution project. Storage unit 22 may store, for each environmental contribution project, options selectable in the environmental contribution project. Control unit 23 can acquire at least one option from storage unit 22 and add the at least one option to the first notification.

By displaying the user with an option of the way of using the created profit via the first notification, it is possible to make the user interested in participation in the environmental contribution project and to encourage the user to participate.

As described above, the first notification may further include various types of information such as information for encouraging participation and a proposal for participation as the information regarding participation.

### <Process of participation request>

After server 20 outputs the first notification, the user determined to be able to participate can apply for participation in the environmental contribution project. For example, the user can transmit a participation request for the environmental contribution project to server 20 via terminal device 30. In this case, the recruitment method and server 20 further process the participation request.

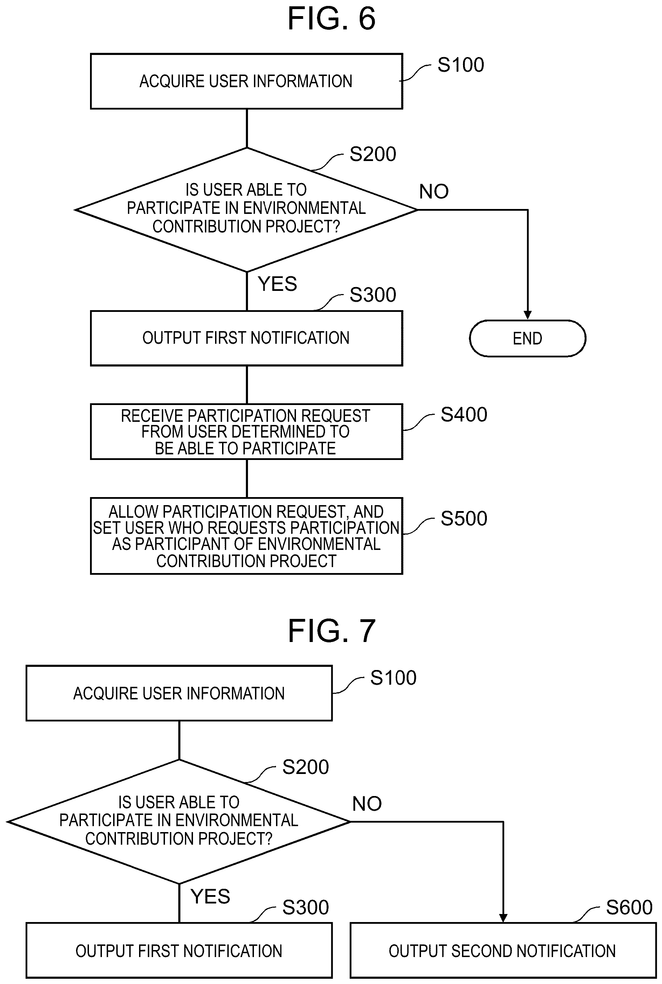

Fig. 6 is a flowchart of an example of the recruitment method in the first exemplary embodiment. In the example shown in Fig. 6, the recruitment method includes step S100 to step S500. Steps S100 to S300 in Fig. 6 are the same as the contents of steps S100 to S300 in Fig. 2, and details are omitted herein.

After outputting the first notification (step S300), control unit 23 of server 20 receives a participation request from the user determined to be able to participate (step S400). For example, control unit 23 receives the participation request from terminal device 30 of the user determined to be able to participate. Control unit 23 can determine whether the user of the transmission source is the user determined to be able to participate based on the identification information of terminal device 30 of the transmission source of the participation request or the identification information of the user of terminal device 30 of the transmission source. Alternatively, control unit 23 can determine whether the user of the transmission source is the user determined to be able to participate by determining whether the participation request is transmitted from the URL or the like of the information regarding the participation of the first notification.

In the example of Fig. 6, in a case where it is determined that the user who is the transmission source of the participation request is the user determined to be able to participate, control unit 23 permits the participation request without performing examination again on the user and home appliance 12. Then, control unit 23 sets the user who has requested participation as a participant of the environmental contribution project (step S500).

However, the date on which server 20 transmits the first notification to the user may be different from the date on which the user transmits the participation request to server 20 via terminal device 30. Therefore, although the second period has not elapsed from the operation start date of home appliance 12 at the time of determining the participation in step S200, the second period may elapse at the time of receiving the participation request in step S400. In order to guarantee the qualification of the participant of the environmental contribution project, control unit 23 may determine again whether the operation start date of home appliance 12 satisfies the third criterion when receiving the participation request. In a case where the third criterion is also satisfied at the time of the participation request, control unit 23 permits the participation request and sets the user as a participant in the environmental contribution project.

When the user who has requested participation in step S500 is set as a participant of the environmental contribution project, control unit 23 registers the user information of the user who has requested participation in the participant information. For example, control unit 23 stores, as participant information, the identification information of the user who has requested participation, the identification information of home appliance 12, the model information or the energy efficiency of home appliance 12, or the like in the database of the participant information of the environmental contribution project to which participation is applied.

In one example, a participation category to the environmental contribution project is selected when the user applies to participate in the environmental contribution project. In this case, the participation request includes the participation category selected by the user, and control unit 23 registers the participation category in the participant information. Different participation categories correspond to different calculation criteria when calculating the environmental contribution information. For example, similarly to the calculation criteria for calculating the reduction estimation value, the first category of the participation category indicates that home appliance 12 is newly installed, and corresponds to the baseline of the energy efficiency reference value. Then, the second category of the participation category indicates that home appliance 12 is to be updated, and corresponds to a baseline of energy efficiency of the home appliance before the update. That is, the participation category includes a first category and a second category different from the first category, and the first category and the second category correspond to different calculation criteria when calculating the environmental contribution information. After participating in the environmental contribution project, server 20 can select the baseline based on the registered participation category and calculate the environmental contribution information.

This completes the process of recruiting participants for the environmental contribution project. According to the recruitment method and the information processing device (server 20) described above, it is possible to determine in advance whether the user of home appliance 12 is able to participate in the environmental contribution project using various determination criteria. By outputting the first notification to the user determined to be able to participate, it is possible to encourage the user to participate in the environmental contribution project. Furthermore, by determining participation/non-participation in advance, it is possible to save or reduce the time and effort for examination when receiving a participation request from the user.

In one example, the information processing device (server 20) outputs a guidance notification regarding the environmental contribution project to all users of the type of home appliances 12 designated by the environmental contribution project before determining whether participation in the environmental contribution project is possible. The guidance notification includes description of the environmental contribution project and the system followed by the environmental contribution project. The guidance notification may further include at least one option of the way of using the profit created by the environmental contribution information by home appliance 12, and the like.

In this example, when receiving such simultaneously transmitted guidance notification via home appliance 12 or terminal device 30, the user can input user information including the model or energy efficiency of home appliance 12 and transmit the user information to server 20. Server 20 acquires the user information input by the user from terminal device 30 or the like (step S100 in Fig. 2), and determines whether the user is able to participate in the environmental contribution project based on the user information (step S200 in Fig. 2). In a case where it is determined that the user is able to participate in the environmental contribution project, server 20 outputs a first notification including information regarding participation in the environmental contribution project (step S300 in Fig. 2). Thereafter, in a case where a participation request is received from the user determined to be able to participate, server 20 sets the user as a participant of the environmental contribution project and registers the user information of the user in the participant information.

In one example, server 20 has a program used to perform the recruitment method of the present disclosure. The program causes control unit 23 of server 20 as the information processing device to execute the recruitment method. Further, server 20 has a non-transitory computer-readable storage medium storing a computer program. When the computer program is executed by the processor (control unit 23), the control method of the present disclosure is implemented. The storage medium may be the same as storage unit 22 of server 20, may be included in storage unit 22, or may be a component different from storage unit 22.

### <<Second exemplary embodiment>>

### <Second notification to user who is unable to participate>

In the second exemplary embodiment, the recruitment method and the information processing device output the second notification to the user (hereinafter, it may be abbreviated as "user who is unable to participate") determined to be unable to participate in the environmental contribution project. In the second exemplary embodiment, server 20 that can establish communication connection with home appliance 12 operates as the information processing device, and executes the recruitment method.

Fig. 7 is a flowchart of an example of the recruitment method in the second exemplary embodiment. In the example shown in Fig. 7, the recruitment method includes steps S100 to S300 and S600. Steps S100 to S300 in Fig. 7 are the same as the contents of steps S100 to S300 in Fig. 2, and details are omitted herein.

As described above, control unit 23 of server 20 as the information processing device determines whether the user is able to participate in the environmental contribution project based on various determination criteria (step S200). In a case where it is determined that the user is unable to participate (step S200: NO), control unit 23 outputs the second notification including the determination result (step S600). For example, control unit 23 may specify the user and terminal device 30 by using the identification information of the user who is unable to participate or the identification information of terminal device 30 of the user, and transmit the second notification to terminal device 30. Control unit 23 may transmit the second notification to home appliance 12, or may transmit the second notification to terminal device 30 via home appliance 12. Terminal device 30 or home appliance 12 displays the received second notification to the user who is unable to participate.

Furthermore, in order to make the user interested in participation in the environmental contribution project, the second notification may further include description of the environmental contribution project, a system followed by the environmental contribution project, and a determination criterion of participation.

In a case where home appliance 12 is associated with a plurality of users, control unit 23 may transmit the second notification to all the users associated with home appliance 12, that is, all the users who are unable to participate.

By outputting the second notification, the possibility of receiving the participation request to the environmental contribution project from the user who is unable to participate can be reduced, and the cost of processing the participation request from the user who is unable to participate can be reduced.

In one example, in order to increase the number of participants in the environmental contribution project, server 20 can make a proposal such that a determination criterion that is not satisfied by users who are unable to participate is satisfied.

For example, in a case where it is determined in step S200 that home appliance 12 does not satisfy both the first criterion and the second criterion, control unit 23 of server 20 can propose a candidate model that can satisfy the first criterion or the second criterion to the user. In this case, the second notification includes a second proposal related to a candidate model that can participate in the environmental contribution project. For example, control unit 23 may set, as a candidate model, a home appliance model having energy efficiency equal to or higher than the energy efficiency reference value or equal to or higher than the energy efficiency of the currently used home appliance 12.

In one example, storage unit 22 stores a comparison table or a database including the model information and the energy efficiency corresponding to the model information for various home appliances. Control unit 23 can select a candidate model by collating the comparison table or the database with the energy efficiency of the baseline corresponding to the first criterion or the second criterion. In another example, storage unit 22 stores a list of candidate models that can participate in the environmental contribution project for each environmental contribution project. Control unit 23 adds at least one of the candidate models included in this list to the second notification.

Note that, in a case where the user purchases new home appliance 12 based on the candidate model, the operation start date of new home appliance 12 is later than the proposed time point, and thus, it is not necessary to consider the third criterion. Similarly, since new home appliance 12 has not yet been registered in the participant information, the fourth criterion may not be considered.

By proposing the candidate model to a user who is unable to participate, it is possible to encourage the user to participate in the environmental contribution project.

In one example, the second notification includes a reduction estimation value related to the environmental contribution information created by the candidate model over the third period. Control unit 23 may calculate the reduction estimation value by the calculation method described in the first exemplary embodiment. At the time of calculation, control unit 23 uses the energy efficiency of the candidate model instead of the energy efficiency of home appliance 12, and uses the energy efficiency of home appliance 12 instead of the energy efficiency of the home appliance before update. That is, control unit 23 may calculate the reduction estimation value based on the energy efficiency of the candidate model.

For example, control unit 23 calculates the first estimation value based on the assumed power consumption, the energy efficiency of the candidate model, and the energy efficiency reference value. Furthermore, control unit 23 calculates the second estimation value based on the assumed power consumption, the energy efficiency of the candidate model, and the energy efficiency of home appliance 12. Control unit 23 adds the larger one of the first estimation value and the second estimation value to the second notification as the reduction estimation value.

By displaying the reduction estimation value to the user via the second notification, it is possible to make the user interested in participation in the environmental contribution project and encourage the user to participate in the environmental contribution project.

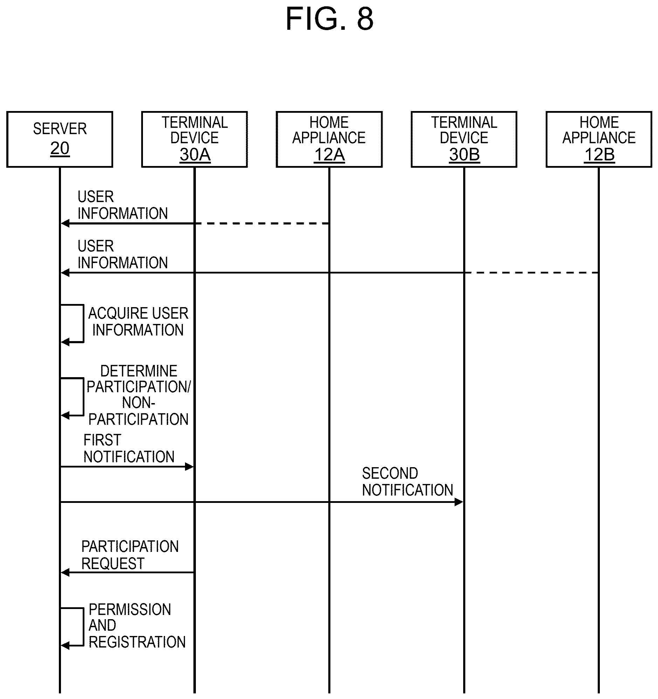

Fig. 8 is a sequence diagram of an example of the recruitment method according to the second exemplary embodiment. In the example illustrated in Fig. 8, terminal device 30A and home appliance 12A are of one user, and terminal device 30B and home appliance 12B are of another user. Server 20 executing the recruitment method receives, from terminal device 30A (and home appliance 12A), user information related to terminal device 30A, home appliance 12A, and a user thereof. Similarly, server 20 receives, from terminal device 30B (and home appliance 12B), user information related to terminal device 30B, home appliance 12B, and a user thereof.

Next, server 20 determines, for each of the user of home appliance 12A and the user of home appliance 12B, whether participation in the environmental contribution project is possible based on the acquired user information. If it is determined that the user of home appliance 12A is able to participate and the user of home appliance 12B is unable to participate, server 20 outputs the first notification to the user of home appliance 12A and outputs the second notification to the user of home appliance 12B.

That is, before receiving the participation request from the user of home appliance 12A or the user of home appliance 12B, server 20 determines participation/non-participation of these users in advance, and transmits the first notification or the second notification to the user based on the determination result.

The user of home appliance 12A reviews the information regarding the participation included in the first notification, and transmits the participation request to server 20 via terminal device 30A. Server 20 receives and permits the participation request, and registers the user of home appliance 12A as a participant in the environmental contribution project.

This completes the processing of the recruitment method for outputting the first notification or the second notification. In this way, it is possible to output the second notification related to the environmental contribution project to encourage the user determined to be unable to participate in the environmental contribution project to participate in the environmental contribution project.

### <<Third exemplary embodiment>>

### <Terminal device is information processing device>

In the example of the third exemplary embodiment, terminal device 30 is executed as an information processing device that determines participation/non-participation of the user and outputs the first notification or the second notification. That is, terminal device 30 as the information processing device executes the recruitment method of the present disclosure.

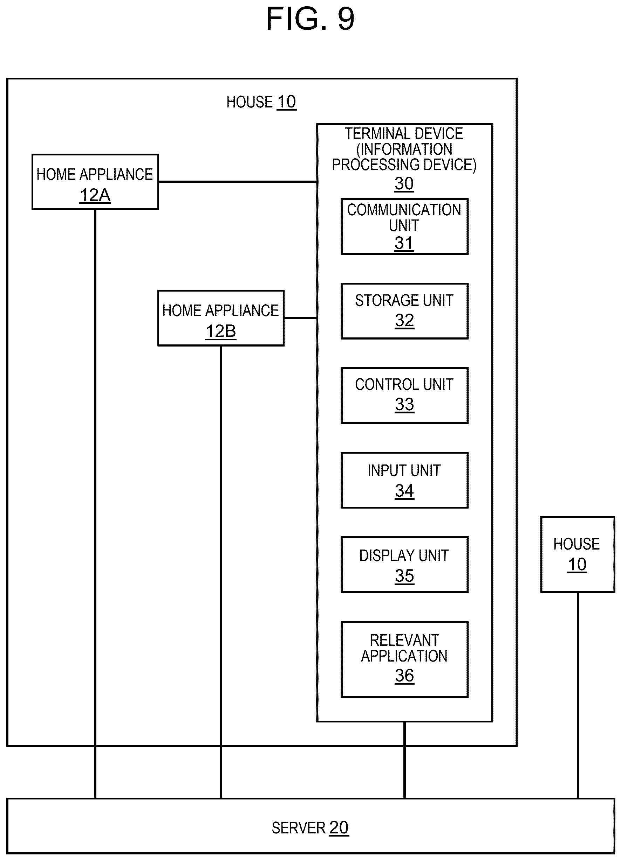

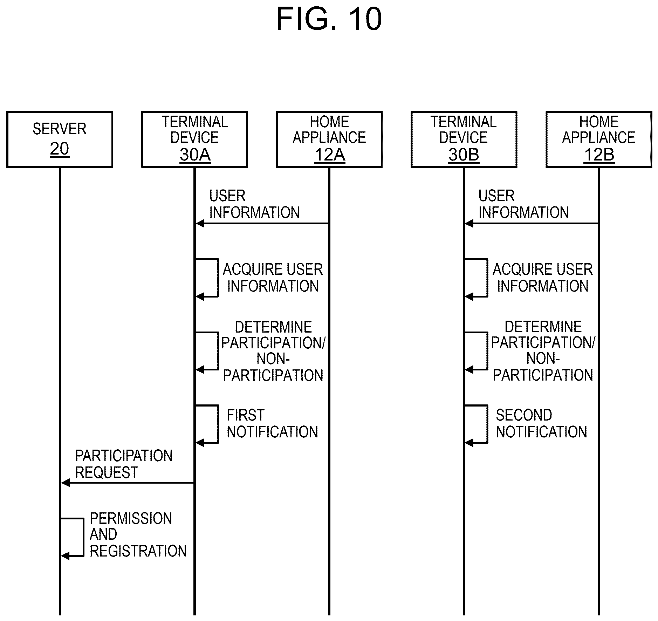

Fig. 9 is a block diagram of an example of an information processing device according to the third exemplary embodiment, and Fig. 10 is a sequence diagram of an example of a recruitment method according to the third exemplary embodiment. In the third exemplary embodiment, terminal device 30 acquires user information by user input, home appliance 12, or server 20.

Terminal device 30 can acquire the determination criterion, the reference value, the baseline, the second period, and the like used for the determination of the participation/non-participation by reading them from storage unit 32 or by inquiring server 20. When the overlapping participation (fourth criterion) is determined, terminal device 30 can determine whether the fourth criterion is satisfied by inquiring server 20 with the identification information of home appliance 12.

Terminal device 30 can also acquire the explanation regarding the environmental contribution project and the like, the power consumption and the baseline assumed for the calculation of the reduction estimation value, the options of the way of using the created profit, the candidate model, and the like, which are used for the creation of the first notification or the second notification, by reading them from storage unit 32 or by inquiring server 20. In addition, terminal device 30 can output the first notification or the second notification so that the first notification or the second notification is displayed on display unit 35 or related application 36.

In the example of Fig. 10, similarly to the example of Fig. 8, it is determined that the users of terminal device 30A and home appliance 12A are able to participate, and it is determined that the users of terminal device 30B and home appliance 12B are unable to participate.

As illustrated in Fig. 10, terminal devices 30A, 30B acquire the user information from the user input or home appliances 12A and 12B, and determine whether the users of terminal devices 30A, 30B are able to participate. Terminal device 30A determines that the user is able to participate, and displays a first notification including information regarding participation to the user via display unit 35 of terminal device 30A. On the other hand, the terminal device 30B may determine that the user is unable to participate, and may display the second notification including the candidate model to the user via display unit 35 of the terminal device 30B.

The user of home appliance 12A reviews the information regarding the participation included in the first notification, and transmits the participation request to server 20 via terminal device 30A. Server 20 receives and permits the participation request of home appliance 12A, and registers the user of home appliance 12A as a participant in the environmental contribution project.

That is, each of terminal devices 30A, 30B determines in advance whether the user is able to participate before transmitting the participation request, and displays the first notification or the second notification to the user based on the determination result.

Note that, in a case where (control unit 33 of) terminal device 30 is implemented as an information processing device, storage unit 32 stores a computer program for causing control unit 33 to execute the recruitment method of the present disclosure, and storage unit 32 is a non-transitory computer-readable storage unit medium in which the computer program is stored. When the computer program is executed by the processor of control unit 33, the recruitment method is implemented.

As described above, terminal device 30 of the user can execute the recruitment method as the information processing device. According to terminal device 30 and the recruitment method, it is possible to actively recruit participants of the environmental contribution project from the user of home appliance 12.

The configurations of the above-described first to third exemplary embodiments can be combined.

### (Other exemplary embodiments)

### (Supplementary Note)

The above description of the exemplary embodiments discloses the following techniques.

(Technique 1) The information processing device of Technique 1 is configured to recruit a participant of an environmental contribution project from a user of a home appliance. The information processing device includes at least one of a communication unit or a storage unit, each being configured to acquire user information including model information or energy efficiency of a home appliance, and a control unit that controls the at least one of the communication unit or the storage unit. The control unit acquires the user information, determines whether the user is able to participate in the environmental contribution project based on the user information, and outputs a first notification including information regarding participation in the environmental contribution project in a case where it is determined that the user is able to participate in the environmental contribution project.

According to such an information processing device, it is possible to actively recruit participants of the environmental contribution project from the user of home appliance.

(Technique 2) According to the information processing device of Technique 2, in the information processing device of Technique 1, the environmental contribution project is a project related to creation of an environmental value. The energy efficiency is a numerical value representing an ability to exhibit an inherent function of home appliance, and relates to power consumption of home appliance in the first period.

According to such an information processing device, it is possible to recruit participants for a project related to creation of an environmental value based on energy efficiency related to power consumption of a home appliance.

(Technique 3) According to the information processing device of Technique 3, in the information processing device according to Technique 1 or 2, the control unit is further configured to execute: receiving a participation request from the user determined to be able to participate; and allowing the participation request, and setting the user who has requested participation as a participant of the environmental contribution project.

According to such an information processing device, it is not necessary to examine the qualification of participation again when receiving the participation request, and it is possible to save or reduce the time and effort of the examination.

(Technique 4) In the information processing device of Technique 4, in the information processing device of Technique 3, the participation request includes a participation category to the environmental contribution project. The participation category includes a first category and a second category different from the first category. The first category and the second category correspond to different calculation criteria when calculating environmental contribution information.

According to such an information processing device, it is possible to recruit users who participate in the participation category using different calculation criteria.

(Technique 5) According to the information processing device of Technique 5, in the information processing device according to Technique 3 or 4, the user information further includes identification information of the user and identification information of the home appliance. When the user who has requested participation is set as a participant of the environmental contribution project, the control unit registers the user information of the user who has requested participation in the participant information. The participant information includes user information of the participant of the environmental contribution project.

According to such an information processing device, it is possible to acquire and register participant information of participants of the environmental contribution project.

(Technique 6) According to the information processing device of Technique 6, in the information processing device according to any one of Techniques 1 to 5, in a case where the control unit determines whether the user is able to participate in the environmental contribution project, the control unit is configured to execute: specifying the energy efficiency of the home appliance based on the model information of the home appliance in a case where the user information does not include the energy efficiency; and determining whether a first criterion or a second criterion is satisfied based on the energy efficiency. The first criterion means that, in a case where home appliance is newly installed, the energy efficiency is equal to or higher than the energy efficiency reference value. The second criterion means that, in a case where home appliance is to be updated, the energy efficiency is equal to or higher than the energy efficiency of the home appliance before the update.

According to such an information processing device, it is possible to determine the participation/non-participation to the participation category corresponding to each determination criterion based on different determination criteria.

(Technique 7) According to the information processing device of Technique 7, in the information processing device of Technique 6, the user information includes an operation start date of the home appliance. When the control unit determines whether the user is able to participate in the environmental contribution project, the control unit is further configured to execute: determining whether a third criterion is satisfied based on the operation start date. The third criterion is that a second period has not elapsed from the operation start date.

According to such an information processing device, it is possible to determine the participation/non-participation based on the criterion related to the operation start date of the home appliance.

(Technique 8) According to the information processing device of Technique 8, in the information processing device of Technique 7, the user information further includes identification information of the home appliance. When the control unit determines whether the user is able to participate in the environmental contribution project, the control unit is further configured to execute: determining whether a fourth criterion is satisfied based on the identification information of the home appliance. The fourth criterion is that the identification information of the home appliance is not registered in participant information. The participant information is the user information of a participant of the environmental contribution project.

According to such an information processing device, it is possible to avoid overlapping participation by the same home appliance.

(Technique 9) According to the information processing device of Technique 9, in the information processing device according to any one of Techniques 1 to 8, the first notification includes a reduction estimation value related to environmental contribution information created by the home appliance over a third period. The control unit calculates the reduction estimation value based on the energy efficiency of the home appliance in a case where it is determined that the user is able to participate.

According to such an information processing device, it is possible to encourage the user to participate in the environmental contribution project by notifying the user of the reduction estimation value by the home appliance.

(Technique 10) According to the information processing device of Technique 10, in the information processing device described in Technique 9, in a case where the control unit calculates the reduction estimation value, the control unit is configured to execute: specifying the energy efficiency of the home appliance based on the model information of the home appliance in a case where the user information does not include the energy efficiency; and calculating the reduction estimation value based on the energy efficiency and an energy efficiency reference value or the energy efficiency of the home appliance before update.

According to such an information processing device, it is possible to calculate the reduction estimation value based on the model information of the home appliance.

(Technique 11) According to the information processing device of Technique 11, in the information processing device described in Technique 10, when the control unit calculates the reduction estimation value, the control unit is configured to execute: calculating a first estimation value based on the energy efficiency and the energy efficiency reference value; and calculating a second estimation value based on the energy efficiency and the energy efficiency of the home appliance before update, and a larger one of the first estimation value and the second estimation value is set as the reduction estimation value.

According to such an information processing device, it is possible to determine a calculation criterion with a relatively large reduction estimation value.

(Technique 12) According to the information processing device of Technique 12, in the information processing device according to Technique 11, the first notification includes a first proposal related to a participation category in the environmental contribution project. The participation category includes a first category and a second category different from the first category. The first estimation value and the second estimation value correspond to the first category and the second category, respectively. The control unit is configured to execute: setting the first category as the first proposal in a case where the first estimation value is larger than the second estimation value; and setting the second category as the first proposal in a case where the second estimation value is larger than the first estimation value.

According to such an information processing device, it is possible to determine a calculation criterion with a relatively large reduction estimation value and propose a participation category advantageous for the user.

(Technique 13) In the information processing device of Technique 13, in the information processing device according to any one of Techniques 1 to 12, the first notification includes at least one option of a way of using a profit created by environmental contribution information by the home appliance.

According to such an information processing device, it is possible to encourage the user to participate in the environmental contribution project by presenting the user with an option of the way of using the profit to be created.

(Technique 14) In the information processing device of Technique 14, in the information processing device according to any one of Techniques 1 to 13, the control unit is configured to execute: outputting a second notification including a determination result in a case where it is determined that the user is unable to participate.

According to such an information processing device, it is possible to present a notification related to the environmental contribution project to the user determined to be unable to participate.

(Technique 15) In the information processing device according to Technique 15, in the information processing device according to Technique 14, the second notification includes a second proposal related to a candidate model that can participate in the environmental contribution project. The control unit is configured to execute: setting a model of the home appliance having the energy efficiency equal to or higher than an energy efficiency reference value or equal to or higher than the energy efficiency of the home appliance as the candidate model.

According to such an information processing device, it is possible to encourage the user determined to be unable to participate to participate in the environmental contribution project by providing a proposal for participation to the user.

(Technique 16) According to the information processing device according to Technique 16, in the information processing device according to Technique 15, the second notification includes a reduction estimation value related to the environmental contribution information created over the third period by the candidate model. The control unit calculates the reduction estimation value based on the energy efficiency of the candidate model.

According to such an information processing device, it is possible to encourage the user to participate in the environmental contribution project by notifying the user of the reduction estimation value by the home appliance of the candidate model.

(Technique 17) A recruitment method according to Technique 17 is a recruitment method of participants of an environmental contribution project from users of home appliances. The recruitment method includes a step of acquiring user information including model information or energy efficiency of the home appliance. Furthermore, the recruitment method includes a step of determining whether the user is able to participate in the environmental contribution project based on the user information. Furthermore, the recruitment method includes a step of outputting a first notification including information regarding participation in the environmental contribution project in a case where the user is determined to be able to participate.

(Technique 18) A computer program according to Technique 18 is a computer program for causing an information processing device to execute the recruitment method described in Technique 17.

(Technique 19) A non-transitory computer-readable storage medium according to Technique 19 is a non-transitory computer-readable storage medium having stored therein a computer program for causing a processor to implement the recruitment method of Technique 17.

According to such a recruitment method, computer program, and storage medium, it is possible to actively recruit participants of the environmental contribution project from the users of the home appliances.

The above exemplary embodiments are merely specific exemplary embodiments of the present disclosure, and the protection scope of the present disclosure is not limited thereto. The present disclosure includes the content described above in the drawings and the specific exemplary embodiments described above, but the present disclosure is not limited to the contents. Various disclosed exemplary embodiments or examples can be combined without departing from the scope or spirit of the present disclosure. Changes not departing from functional and structural principles of the present disclosure are within the scope of the claims.

## Claims

1. An information processing device configured to recruit a participant in an environmental contribution project from a user of a home appliance, the information processing device comprising:
at least one of a communication unit or a storage unit, each being configured to acquire user information including model information or energy efficiency of the home appliance; and
a control unit that controls the at least one of the communication unit or the storage unit, wherein
the control unit is configured to execute:
acquiring the user information;
determining whether the user is able to participate in the environmental contribution project based on the user information; and
outputting a first notification including information regarding participation in the environmental contribution project in a case where the user is determined to be able to participate in the environmental contribution project.

2. The information processing device according to Claim 1, wherein
the environmental contribution project is a project related to creation of environmental value, and
the energy efficiency is a numerical value representing an ability to exhibit an inherent function of the home appliance, and relates to power consumption of the home appliance in a first period.

3. The information processing device according to Claim 1, wherein
the control unit is further configured to execute:
receiving a participation request from the user determined to be able to participate; and
allowing the participation request, and setting the user who has requested participation as a participant of the environmental contribution project.

4. The information processing device according to Claim 3, wherein
the participation request includes a participation category to the environmental contribution project,
the participation category includes a first category and a second category different from the first category, and
the first category and the second category correspond to different calculation criteria when calculating environmental contribution information.

5. The information processing device according to Claim 3, wherein
the user information further includes identification information of the user and identification information of the home appliance,
the control unit registers the user information of the user who has requested participation in the participant information when the user who has requested participation is set as a participant of the environmental contribution project, and
the participant information includes the user information of a participant of the environmental contribution project.

6. The information processing device according to Claim 1, wherein
in a case where the control unit determines whether the user is able to participate in the environmental contribution project,
the control unit is configured to execute:
specifying the energy efficiency of the home appliance based on the model information of the home appliance in a case where the user information does not include the energy efficiency; and
determining whether a first criterion or a second criterion is satisfied based on the energy efficiency,
the first criterion is that, in a case where the home appliance is newly installed, the energy efficiency is equal to or higher than an energy efficiency reference value, and
the second criterion is that, in a case where the home appliance is to be updated, the energy efficiency is equal to or higher than the energy efficiency of the home appliance before update.

7. The information processing device according to Claim 6, wherein
the user information includes an operation start date of the home appliance,
when the control unit determines whether the user is able to participate in the environmental contribution project,
the control unit is further configured to execute:
determining whether a third criterion is satisfied based on the operation start date, and
the third criterion is that a second period has not elapsed from the operation start date.

8. The information processing device according to Claim 7, wherein
the user information further includes identification information of the home appliance,
when the control unit determines whether the user is able to participate in the environmental contribution project,
the control unit is further configured to execute:
determining whether a fourth criterion is satisfied based on the identification information of the home appliance,
the fourth criterion is that the identification information of the home appliance is not registered in participant information, and
the participant information is the user information of a participant of the environmental contribution project.

9. The information processing device according to Claim 1, wherein
the first notification includes a reduction estimation value related to environmental contribution information created by the home appliance over a third period, and
the control unit calculates the reduction estimation value based on the energy efficiency of the home appliance in a case where it is determined that the user is able to participate.

10. The information processing device according to Claim 9, wherein
in a case where the control unit calculates the reduction estimation value,
the control unit is configured to execute:
specifying the energy efficiency of the home appliance based on the model information of the home appliance in a case where the user information does not include the energy efficiency; and
calculating the reduction estimation value based on the energy efficiency and an energy efficiency reference value or the energy efficiency of the home appliance before update.

11. The information processing device according to Claim 10, wherein
when the control unit calculates the reduction estimation value,
the control unit is configured to execute:
calculating a first estimation value based on the energy efficiency and the energy efficiency reference value; and
calculating a second estimation value based on the energy efficiency and the energy efficiency of the home appliance before update, and
a larger one of the first estimation value and the second estimation value is set as the reduction estimation value.

12. The information processing device according to Claim 11, wherein
the first notification includes a first proposal related to a participation category in the environmental contribution project,
the participation category includes a first category and a second category different from the first category,
the first estimation value and the second estimation value correspond to the first category and the second category, respectively, and
the control unit is configured to execute:
setting the first category as the first proposal in a case where the first estimation value is larger than the second estimation value; and
setting the second category as the first proposal in a case where the second estimation value is larger than the first estimation value.

13. The information processing device according to Claim 1, wherein
the first notification includes at least one option of a way of using a profit created by environmental contribution information by the home appliance.

14. The information processing device according to Claim 1, wherein
the control unit is configured to execute:
outputting a second notification including a determination result in a case where it is determined that the user is unable to participate.

15. The information processing device according to Claim 14, wherein
the second notification includes a second proposal related to a candidate model that can participate in the environmental contribution project, and
the control unit is configured to execute:
setting a model of the home appliance having the energy efficiency equal to or higher than an energy efficiency reference value or equal to or higher than the energy efficiency of the home appliance as the candidate model.
